(19) **Europäisches Patentamt**
**European Patent Office**
**Office européen des brevets**

(11) **EP 4 064 790 B1**

(12) **EUROPEAN PATENT SPECIFICATION**

(45) Date of publication and mention
of the grant of the patent:
**16.08.2023 Bulletin 2023/33**

(51) International Patent Classification (IPC):
**H05B 6/10** (2006.01)

(52) Cooperative Patent Classification (CPC):
**H05B 6/10**

(21) Application number: **21163884.6**

(22) Date of filing: **22.03.2021**

(54) **HEATING SYSTEM, USE OF A HEATING SYSTEM, TURBINE, AND METHOD FOR HEATING**

HEIZSYSTEM, VERWENDUNG EINES HEIZSYSTEMS, TURBINE UND VERFAHREN ZUM HEIZEN

SYSTÈME DE CHAUFFAGE, UTILISATION D'UN SYSTÈME DE CHAUFFAGE, TURBINE ET PROCÉDÉ DE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2022 Bulletin 2022/39**

(73) Proprietor: **Karlsruher Institut für Technologie 76131 Karlsruhe (DE)**

(72) Inventors:
• **Hernández González, Francisco Alberto 75177 Pforzheim (DE)**

• **Maione, Ivan Alessio 76133 Karlsruhe (DE)**

(74) Representative: **Müller-Boré & Partner Patentanwälte PartG mbB Friedenheimer Brücke 21 80639 München (DE)**

(56) References cited:
**EP-A1- 2 489 874 US-A- 4 475 721 US-A1- 2014 110 938 US-A1- 2017 038 156**

**Description**

The invention concerns a heating system, a use of a heating system, and a method for heating.

The invention lies in the field of heat energy generation, in particular in the field of converting kinetic energy into heat energy. A specific field to which the invention may be applied is the field of renewable energy. In particular, the stochastic nature of the energy collected from renewable energy sources, such as for example by means of wind and/or water turbines, is an important drawback for the large scale roll-out or base load use of these energy sources, and of renewable energy in general. In particular, renewable energy sources, such as wind energy, may result in highly erratic energy generation, which negatively affects the grid stability of an energy grid relying at least in part upon said renewable energy sources. Moreover, if there is a surplus of energy due to for example a peak in solar energy or sudden wind gusts without a corresponding demand that can potentially consume the surplus of energy, this energy is not harvested, or, if it is, is sold at an unprofitable price and/or necessitates the implementation and use of grid stabilisation procedures.

For example in the case of wind and/or water energy, several ways exist to store the mechanically harvested energy from a wind and/or water energy source. However, some require intermediate conversion steps before such storage becomes possible (e.g. in a first step, electricity is generated, which may subsequently be used to power electric heaters to generate heat energy), requiring additional equipment (such as alternators, AC/DC converters, ohmic heaters, etc.). Other means to store energy may require very high capital costs and a privileged geographical location (such as pumped hydro energy storage), may suffer from low lifetime (e.g. electrochemical batteries), or low energy density (e.g. super capacitors).

EP 2 489 874 A1 (SUMITOMO ELECTRIC INDUSTRIES [JP]) 22 August 2012 (2012-08-22) describes an electric power generation system utilizing wind power, being excellent in maintainability, and capable of reducing in size and weight a nacelle provided at an upper portion of a tower.

Therefore, it is an object of the present invention to provide a heating system having improved efficiency and energy conversion properties.

At least the above object is solved by a heating system, a use of a heating system, a turbine, and a method of heating having the features of the independent claims, respectively. Preferred embodiments form the subject of the dependent claims.

An aspect relates to a heating system comprising at least one magnetic module, wherein each magnetic module is configured to generate a magnetic field. The heating system further comprises a conductive fluid transportation network, wherein the conductive fluid transportation network comprises a conductive fluid, and one or more heating sections, wherein the conductive fluid is configured to flow through at least the one or more heating sections of the conductive fluid transportation network. The heating system is configured to cause relative movement between the at least one magnetic module and the one or more heating sections thereby generating a variable magnetic flux in the conductive fluid in the one or more heating sections resulting in eddy currents in the conductive fluid. The generated eddy currents heat the conductive fluid in the one or more heating sections. In other words, the heating system is configured to cause relative movement between the at least one magnetic module and the one or more heating sections to generate a variable magnetic flux in the conductive fluid in the one or more heating sections to generate eddy currents in the conductive fluid, wherein the generated eddy currents heat the conductive fluid in the one or more heating sections.

Advantageously, according to the inventions it is possible to directly produce, in particular $CO_2$-neutral, high-grade heat energy from mechanical harvested energy, such as from renewable sources.

In particular, according to the invention, further advantageously, mechanical energy is not converted first into electricity using e.g. wind turbines, wherein said generated electricity is then converted using Ohmic heating to heat a heat transportation fluid.

Rather, the heating system advantageously is configured to convert mechanical energy into heat energy, without any intermediary step of producing electrical energy that in turn is used to heat an electrical heating system for heating a heating medium. In particular, the mechanical energy may at least comprise kinetic energy. In particular, the heating system may be configured to convert mechanical energy of the at least one magnetic module and/or the one or more heating sections into heat energy. In particular, the heating system may be configured to convert mechanical energy directly into heat energy stored in the conductive fluid. Therefore, it may be possible for the heating system to directly generate heat energy from mechanical energy, and to further generate said heat energy directly in the conductive fluid. Therefore, it may be possible for the conductive fluid to both function as a heat generation medium as well as a heat transportation medium.

The heating system comprises at least one magnetic module. In particular, each magnetic module may be configured to generate a magnetic field. Specifically, the magnetic module may comprise at least one of a permanent magnet, an inductive coil and a superconducting magnet. In particular, each magnetic module may generate the corresponding magnetic field across at least one gap of the respective magnetic module, which may be referred to as magnetic gap herein. The at least one magnetic module may be fixed relative to one another. In other words, the at least one magnetic module may be fixedly arranged, such that any relative position between any two magnetic modules is substantially fixed.

The heating system further comprises a conductive fluid transportation network, wherein the conductive fluid transportation network comprises a conductive fluid. The conductive fluid transportation network may in particular be configured as a closed fluid transportation network. In other words, the conductive fluid may be circulated through the conductive fluid transportation network, such as for example by a pump. The conductive fluid may comprise or may be any kind of conductive fluid, such as for example a liquid metal and/or a molten salt. In particular, the conductive fluid may have a conductivity of at least $10^2$ S/m, preferable at least $10^3$ Slm. Furthermore, a viscosity of the conductive fluid may affect a potential pressure drop in the conductive fluid. In particular, the conductive fluid may have a viscosity of at least $10^{-4}$ Pa*s to avoid excessive pressure drops. Furthermore, the conductive fluid may be chosen to have a maximum Hartmann number (see equation (3) below) of $10^4$ so that magneto-hydrodynamic effects may become negligible. Other physical properties of the conductive fluid may be chosen to suit the particular operational environment of the heating system. For example, heavier conductive fluids, such as heavier liquid metals, may be chosen for heating systems, in which the conductive fluid does not require to be pumped over a significant height, such as for example wind turbines having a substantially vertical rotation axis. Conversely, a lighter conductive fluid may be chosen for heating systems which require the conductive fluid to be pumped over a significant height, such as for example in conventional wind turbines having a substantially horizontal rotation axis. Furthermore, in heating systems, in which the generated heat is intended to be at least partially stored in the conductive fluid, a conductive fluid having a high heat capacity may be chosen.

The conductive fluid transportation network further comprises one or more heating sections, wherein the conductive fluid is configured to flow through at least the one or more heating sections of the conductive fluid transportation network. In particular, the one or more heating sections may be implemented as one or more piping sections. Furthermore, the one or more heating sections may in particular be non-magnetic and/or non-metallic and/or non-conductive. Furthermore, the one or more heating sections may further be configured such that high-temperature conductive fluid may flow therethrough. The one or more heating sections may in particular have a substantially circular cross-section. However, other cross-sections may also be implemented.

The one or more heating sections may be provided with thermal insulation in order to minimize heat energy loss during generation and transport of heat energy. The one or more heating sections may be 3D-printed. In particular, the one or more heating sections may be provided as double-walled heating sections. A space between the two walls of a double-walled heating section may be filled with a thermally insulating material or gas, or may be implemented as a low-pressure or vacuum volume. Furthermore, by 3D-printing the one or more heating sections, thermal expansion features may be integrated into the one or more heating sections. Furthermore, the one or more heating sections may be treated with thermal barriers and/or high-temperature coatings. In particular, said thermal barriers and/or high-temperature coatings may be provided on an inner side of the one or more heating sections, which may minimize thermal expansion effects caused by the heated conductive fluid. Furthermore, other sections of the conductive fluid transportation network may also comprise any of the herein described features of the one or more heating sections.

The heating system is configured to cause relative movement between the at least one magnetic module and the one or more heating sections to generate a variable magnetic flux in the conductive fluid in the one or more heating sections to generate eddy currents in the conductive fluid, wherein the generated eddy currents heat the conductive fluid in the one or more heating sections. In particular, the relative movement may be caused by holding one of the at least one magnetic module and the one or more heating sections stationary, while moving the other of the at least one magnetic module and the one or more heating sections. Furthermore, relative movement may also be caused by moving both of the at least one magnetic module and the one or more heating sections relative to one another. In particular, the variable magnetic flux generated in the conductive fluid may be caused by the generated magnetic field of the at least one magnetic module in combination with the relative movement of the one or more heating sections, and therewith the conductive fluid, through the generated magnetic field.

In particular, the relative movement may cause the one or more heating sections to traverse the at least one magnetic gap. Due to the magnetic field generated across the at least one magnetic gap, a respective heating section and the conductive fluid in the respective heating section may be temporarily exposed to a variable magnetic flux. In particular, said variable magnetic flux may generate eddy currents in the conductive fluid in the respective heating section, which may cause the conductive fluid to be heated by the Joule effect.

In particular, the conductive fluid may therefore be both a heat generation medium, as well as a transportation medium for transporting the generated heat.

In particular, the heating system may be configured to generate heat energy directly from mechanical and/or kinetic energy. In other words, the heating system may be configured to generate heat energy from mechanical and/or kinetic energy without first converting the mechanical and/or kinetic energy into electricity and subsequently using a heater to convert the electricity into heat energy. In particular, it is therefore possible to generate said heat energy without the need to implement and/or provide the necessary infrastructure and/or machinery to perform the intermediate steps of electricity generation and electrical heating. In contrast, conventional heating systems rely on generating electricity from kinetic and/or mechanical energy, such as in a wind turbine, and then in turn converting the electricity into heat energy by powering one or more electrical heaters.

Therefore, it may be possible to convert mechanical energy, for example harvested from renewable sources such as wind and/or water turbines, directly into sensible heat into a conductive enough fluid, such as for example a liquid metal and/or molten salt. Such a conductive fluid may then carry high-grade heat that may be directly used, such as by conversion into electricity using e.g. a Rankine or Rayton cycle, by using said heat as a source of $CO_2$-neutral process heat for energy intensive industries such as for example the cement industry, by accumulating said heat into a thermal storage system, and/or by using said heat for hydrogen production. Said fields of application are only given as an example, and the generated heat may be used in a plurality of other ways. In particular, it may therefore be possible to greatly increase the range of applicability of such renewable energy sources.

Furthermore, such a direct conversion of mechanical energy into heat energy may allow the production of high quality, continuous electricity with higher thermal efficiency through, for example, a thermal buffer. Additionally or alternatively, such a direct conversion of mechanical energy into heat energy may also allow at the same time to use at least a part of the high grade heat for energy intensive industries (such as cement, metallurgy, chemical, etc.) to reduce their $CO_2$ footprint. In addition, such direct conversion allows for a selection of heating section material, which may be thermally insulated from an inner side thereof to reduce heat energy losses to the surroundings (which may also include the at least one magnetic module, which may be negatively influenced by high temperatures). Furthermore, such insulating material may also avoid and/or reduce thermal expansion issues and/or stress of the piping and housing.

In addition, such a heating system may also be applicable to renewable energy sources. In particular, it may therefore be possible to generate heat energy from said renewable energy sources. Specifically, by efficiently generating and storing heat energy, the heating system may improve the energy supply stability of even erratic renewable energy sources.

The heating system may further comprise a stator, and a rotor configured to rotate around a rotation axis relative to the stator, wherein the at least one magnetic module is fixed to the rotor to rotate around the rotation axis during rotation of the rotor, and wherein the one or more heating sections are fixed to the stator. In particular, the rotor may be any kind of driven rotor, such as for example the rotor of a wind turbine or water turbine. However, other types of rotors may also be implemented. Furthermore, by fixing the one or more heating sections to the stator, a simplified design may be possible, as no complex moving connections of the conductive fluid transportation network may be necessary. However, it may nevertheless also be possible to fix the one or more heating sections to the rotor and to fix the at least one magnetic module to the stator.

The one or more heating sections may further comprise two or more heating sections. In particular, by providing two or more heating sections, the overall amount of mechanical energy converted into heat energy may be increased and/or a volume of the conductive fluid that is heated by the generated eddy currents may be increased. In particular, the two or more heating sections may be arranged circumferentially around the rotation axis of the rotor. Furthermore, the two or more heating sections may be arranged circumferentially and equally spaced around the rotation axis of the rotor. Thereby, a homogeneous heat distribution may be achieved in the circumferential direction around the rotation axis. However, the heating system is not restricted to such a configuration. In particular, the two or more heating sections may be arranged circumferentially and unequally spaced around the rotation axis of the rotor. In particular, it may therefore be possible to adapt the arrangement of the two or more heating sections to suit local operational and/or situational requirements.

The at least one magnetic module may further comprise two or more magnetic modules. In particular, by providing two or more magnetic modules, the overall amount of mechanical energy converted into heat energy may be increased and/or a volume of the conductive fluid that is heated by the generated eddy currents may be increased. In particular, the two or more magnetic modules may be arranged circumferentially around the rotation axis of the rotor. Furthermore, the two or more magnetic modules may be arranged circumferentially and equally spaced around the rotation axis of the rotor. Thereby, a homogeneous heat distribution and/or heat generation may be achieved in the circumferential direction around the rotation axis. However, the heating system is not restricted to such a configuration. In particular, the two or more heating sections may be arranged circumferentially and unequally spaced around the rotation axis of the rotor. In particular, it may therefore be possible to adapt the arrangement of the two or more heating sections to suit local operational and/or situational requirements. In particular, the two or more magnetic modules may be arranged circumferentially around the rotation axis of the rotor such that a distance between any two, preferentially any two neighbouring, magnetic modules is larger than a minimum separation distance. In particular, it may therefore be possible to prevent and/or reduce interference effects caused by said two respective magnetic modules.

The heating system may comprise a first number of magnetic modules and the conductive fluid transportation network may comprise a second number of heating sections. In particular, the first number may be equal to the second number. However, the heating system is not limited to such a configuration. In particular, the first number may be larger than the second number, or the first number may be lower than the second number.

The rotor may further comprise at least one magnetic stage, wherein one or more of the at least one magnetic module may be mounted on each magnetic stage. In particular, two or more magnetic modules may be mounted on each magnetic stage. In particular, a fixed number of magnetic modules may be mounted on each magnetic stage. In particular, each magnetic stage of the at least one magnetic stage may be identically configured. The at least one magnetic stage may be arranged around a rotation axis of a rotor, such that each magnetic stage is equally spaced along a radial direction from the rotation axis. In particular, in such a configuration, the gaps of one or more magnetic modules mounted on different magnetic stages may line up along a circular path concentric with the rotation axis. In particular, in such a configuration, a heating section fixed to the stator may relatively traverse in turn each of the gaps of the one or more magnetic modules mounted on different magnetic stages that line up along a circular path concentric with the rotation axis during rotation of the rotor. Relatively traverse is to be understood as a relative movement, such that the heating section may be stationary while the at least one magnetic module is in motion during rotation of the rotor.

The rotor may be a rotor of a turbine. The turbine may be one of a wind turbine or a water turbine. In particular, it may therefore be possible to adapt the heating system to generate heat energy from renewable energy sources, such as wind or water power. While some of the features herein may be described in terms of either a wind turbine or a water turbine, it is understood that the invention is not restricted to any one medium, such as air or water, causing rotation of the turbine. Therefore, in particular, features described in terms of a wind turbine may for example also be implemented with a water turbine, and vice versa.

The rotor may comprise a gearbox. The gearbox may be a wind turbine planetary gearbox and the rotor may be a wind turbine rotor. In particular a structural support of the wind turbine may be attached to a sun of the wind turbine planetary gearbox and the planets of the wind turbine planetary gearbox may be driven by the wind turbine rotor. In particular, the gearbox may be configured to amplify the relative movement, such as for example a rotational speed of the rotor and/or the at least one magnetic module, to adjust an eddy current heating power. In particular, the gearbox may have a transmission ratio of at most 120:1, preferentially at most 60:1, preferentially at most 20:1, further preferentially at most 10:1. In particular, conventional gearboxes for wind turbines have high gearbox transmission ratios and multiple stages, which may comprise a plurality of bearings. The heating system may allow for the provision of gearboxes with a significantly reduced transmission ratio and/or number of stages, reducing the number of bearings, wherein a reduction of the number of bearings may significantly reduce a failure rate of the wind turbine. In particular, by tuning parameters of the heating system, such as for example the choice of conductive fluid, number of magnetic modules, and the heated length of the one or more heating sections, it may be possible to implement a rotor without a gearbox. For example, in the experimental system according to Tables 1 to 4 (see below), by using liquid sodium as conductive fluid, increasing the number of magnetic modules and/or magnetic stages from 50 to 70, and raising the heated length from 1.3m to 2m, it may be possible to provide a heating system without a gearbox, while still generating the same amount of power.

The heating system may furthermore be configured such that the generated eddy currents may heat the conductive fluid to temperatures of over approx. 300°C, preferentially over approx. 500°C, further preferentially over approx. 1000°C, further preferentially of over approx. 1500°C, further preferentially of over approx. 2000°C. However, the heating system is not limited to the above configuration. In particular, the heating system may be configured to operate as a Rankine cycle such that the generated eddy currents may heat the conductive fluid to temperatures higher than a temperature of a cold source of the Rankine cycle, wherein the temperature of the cold source may for example be an ambient temperature of the heating system. In particular, the higher the temperature to which the conductive fluid is heated by the generated eddy currents, the higher an efficiency of the heating system may be. In particular, the heating system may therefore be configured to heat the conductive fluid to very high temperatures, which may be beneficial and/or suitable for use in energy intensive industries. In particular, the conductive fluid transportation network may be configured to transport the conductive fluid having temperatures of at least approx. 300°C, preferentially at least approx. 500°C, further preferentially at least approx. 1000°C, further preferentially at least approx. 1500°C, further preferentially at least approx. 2000°C. In particular, the conductive fluid transportation network may therefore comprise piping elements and/or piping sections configured to withstand temperatures of at least approx. 300°C, preferentially at least approx. 500°C, further preferentially at least approx. 1000°C, further preferentially at least approx. 1500°C, further preferentially at least approx. 2000°C, and/or the conductive fluid may be configured to withstand temperatures of at least approx. 300°C, preferentially at least approx. 500°C, further preferentially at least approx. 1000°C, further preferentially at least approx. 1500°C, further preferentially at least approx. 2000°C.

For example, GaInSn (Galinstan) may be chosen as conductive fluid, wherein an operating temperature of the conductive fluid may reach approx. 2000°C. Furthermore, the generated heat may be stored in massive energy storage with latent heat from molten Si. Furthermore, at temperatures beyond 1000°C energy intensive industries may be provided with generated, $CO_2$-neutral process heat. Furthermore, at such high temperatures it may additionally be possible to produce qualitative electric power with high efficiency.

The conductive fluid transportation network may further comprise a cold leg distributor fluidly connected to the at least one heating section, wherein the conductive transportation network is configured such that the conductive fluid flows from the cold leg distributor to the at least one heating section. Thereby, an efficient distribution of conductive fluid from the cold leg distributor to the one or more heating sections may be provided. In particular, the cold leg distributor may be configured to be substantially circular, wherein the cold leg distributor may in particular be concentrically arranged around the rotation axis.

The conductive fluid transportation network may further comprise a hot leg distributor fluidly connected to the at least one heating section, wherein the conductive transportation network is configured such that the conductive fluid flows from the at least one heating section to the hot leg distributor. Thereby, an efficient collection of conductive fluid from the one or more heating sections by the hot leg distributor may be provided. In particular, the hot leg distributor may be configured to be substantially circular, wherein the hot leg distributor may in particular be concentrically arranged around the rotation axis.

The conductive fluid in the cold leg distributor may have a first temperature and the conductive fluid in the hot leg distributor may have a second temperature, wherein the first temperature may be lower than the second temperature.

The conductive fluid transportation network may further comprise at least one thermal expansion compensation device, wherein the at least one thermal expansion compensation device may be configured to compensate for thermal expansion caused by the heating of the conductive fluid in the at least one heating section. In particular, the at least one thermal expansion compensation device may comprise one or more piping loops and/or piping bends of the conductive fluid transportation network.

The one or more heating sections may comprise at least two substantially linear piping sections, wherein the at least two substantially linear piping sections may be arranged to be substantially parallel to the rotation axis. However, the one or more heating sections are not restricted to comprising only linear piping sections. In particular, the one or more heating sections may alternatively and/or additionally comprise at least two non-linear piping sections, such as for example at least two bent piping sections. Therefore, while features and embodiments may be discussed herein in relation to substantially linear piping sections, such features and embodiments may also apply to non-linear piping sections, and vice versa.

In particular, the conductive fluid may be configured to flow through the at least two substantially linear piping sections. Furthermore, the at least two substantially linear piping sections of two or more heating sections may be arranged within and/or along a shared plane or may be arranged within and/or along a shared circumferential surface around the rotation axis.

The at least two substantially linear piping sections may be arranged and/or orientated with respect to the generated magnetic field such that a Lorentz force generated by the generated eddy currents on the conductive fluid due to the magnetic field of the at least one magnetic module is at least partially directed along the direction of flow of the conductive fluid in the at least one or more heating section. In particular, the at least two substantially linear piping sections may be arranged and/or orientated with respect to the generated magnetic field such that the generated Lorentz forces on the conductive fluid in the one or more heating sections substantially cancel out. Alternatively, the at least two substantially linear piping sections may be arranged and/or orientated with respect to the generated magnetic field to generate a magnetic field wave in the same direction as the fluid flow, thereby providing an additional supportive pumping force on the conductive fluid. For example, the at least two substantially linear piping sections may be arranged and/or oriented at least partially along the direction of the magnetic field wave, e.g. an angular rotation direction of the rotor, thereby providing an additional supportive pumping force on the conductive fluid.

In an example wherein the heating system comprises a stator and a rotor configured to rotate around a rotation axis relative to the stator, wherein the at least one magnetic module is fixed to the rotor to rotate around the rotation axis during rotation of the rotor, and wherein the one or more heating sections are fixed to the stator, the heating system may be configured such that each substantially linear piping section is arranged and/or oriented such that a flow direction of the conductive fluid through the respective substantially linear piping section comprises a non-zero flow direction component parallel to and in direction of a rotation direction of the rotor around the rotation axis. The flow direction may be an average flow direction of the conductive fluid through the respective substantially linear piping section. Therefore, it may be possible to convert at least some kinetic energy of the rotor directly into kinetic energy of the conductive fluid, thereby providing an additional supportive pumping force on the conductive fluid. In particular, the heating system may therefore be at least partially configured as a magnetic induction pump.

Furthermore, the heating system may be configured to prevent and/or minimize a pressure loss of the conductive fluid in the one or more heating sections. In particular, the heating system may be configured to reduce a flow speed of the conductive fluid in the one or more heating sections, such as for example by increasing a number of magnetic modules and/or magnetic stages, by increasing the number of piping sections provided per heating section, and/or by increasing a cross-sectional area of the one or more heating sections and/or the piping sections.

Furthermore, the one or more heating sections may comprise at least one piping loop, wherein the conductive fluid may be configured to flow through the at least one piping loop, wherein the eddy currents may be generated in the conductive fluid within the at least one piping loop. In particular, each heating section may comprise a plurality of piping loops. The plurality of piping loops may be arranged within a two-dimensional plane and/or as a bundle of piping loops.

The one or more heating sections may be formed from at least a piping material, wherein the piping material may have a low thermal expansion coefficient and/or may be non-conductive. In particular, by providing a non-conductive piping material, it may be possible to prevent a generation of eddy currents within the piping material and therefore improve the overall efficiency of the heating system.

The conductive fluid transportation network may further comprise at least one pumping unit, wherein the at least one pumping unit may be configured to circulate the conductive fluid through the conductive fluid transportation network. In particular, the heating system may further comprise one or more additional fluid transportation networks, wherein each of said additional fluid transportation networks may comprise at least one pumping unit configured to circulate the respective fluid therethrough.

The conductive fluid transportation network may further comprise at least one heat energy storage system, wherein the at least one heat energy storage system may be configured to store heat energy of the conductive fluid. The at least one heat energy storage system may for example comprise a molten salt heat storage system and/or a thermocline heat storage system. The at least one heat energy storage system may be at least one thermocline storage system.

The heating system may comprise at least one heat exchange unit and at least one secondary heat energy storage system. The at least one secondary heat energy storage system may for example comprise a molten salt heat storage system and/or a thermocline heat storage system. The at least one secondary heat energy storage system may comprise a high temperature, hot heat energy storage system and/or a low temperature, cold heat energy storage system. The at least one heat exchange unit may be configured to transfer heat energy from the conductive fluid of the fluid transportation network to the secondary heat energy storage system. In particular, the secondary heat energy storage system may comprise a secondary heat transportation fluid network comprising a secondary heat transfer fluid. The at least one heat exchange unit may be configured to transfer heat energy from the conductive fluid to the secondary heat transfer unit. The secondary heat transportation network may further comprise at least one secondary pumping unit configured to circulate the secondary heat transfer fluid through the secondary heat transportation fluid network.

The conductive fluid transportation network may further comprise a second heat exchange unit and at least one power generator system, such as a Rankine cycle generator system and/or a Brayton cycle generator system, configured to generate electricity from heat energy, wherein the second heat exchange unit is configured to transfer heat energy from the at least one heat energy storage system to the at least one power generator system. Furthermore, the heating system may further comprise a primary electricity generator connected to the rotor, wherein the primary electricity generator may be configured to generate electricity from the rotation of the rotor.

The heating system may further comprise at least one heat energy consumer system, wherein the heating system is configured to transfer heat energy from the conductive fluid to the at least one heat energy consumer system. In particular, the at least one heat energy consumer system may be directly connected to the conductive fluid transportation network. Alternatively or additionally, the at least one heat energy consumer system may be indirectly connected, such as via one or more intermediate heat exchange units and/or additional heat transportation networks, to the conductive fluid transportation network. In particular, the at least one heat energy consumer system may be an entity of an energy intensive industry, such as for example chemical and/or petrochemical, glass and ceramics, cement and lime production, iron, steel, non-ferrous metals and metal casting industries to name but just a few.

The conductive fluid transportation network may further comprise at least one cooling system configured to cool the piping material of the one or more heating section. In particular, the at least one cooling system may comprise at least one active cooling unit, such as a forced air convection cooling unit, and/or at least one passive cooling unit, such as heat sinks or natural convection. In particular, it may therefore be possible to prevent or reduce thermal stress in the piping material, thereby improving the durability of the overall heating system.

The conductive fluid transportation network may further comprise a fluid heating unit, wherein the fluid heating unit is configured to heat the conductive fluid if the conductive fluid has a temperature below a predetermined temperature threshold. In particular, the fluid heating unit may be provided with a maximum fluid temperature and a minimum fluid temperature, wherein the fluid heating unit is configured to maintain a temperature of the conductive fluid in between the minimum fluid temperature and the maximum fluid temperature. Alternatively or additionally, a conductive fluid having a melting temperature below an ambient temperature may be utilized. The ambient temperature may be a lowest predicted ambient temperature of the heating system.

The fluid heating unit may be an electrical fluid heating unit. The fluid heating unit may be powered by an electric power source such as a battery and/or by electrical power provided by the electrical power grid and/or by a photovoltaic element, a power cell, etc. The electrical fluid heating unit may be powered by electrical current provided and/or induced by the rotation of the rotor. In other words, the turbine, e.g. the wind turbine may also comprise an electrical generator that may be utilized to generate electrical power to power the heating unit.

Alternatively or additionally, the fluid heating unit may be or comprise a heating unit that may burn fuel, such as natural gas or oil, etc. in order to heat the fluid and/or in order to create electrical energy to heat the fluid. The fluid may be stored in or close to the turbine or be provided by a fluid support grid.

Alternatively or additionally, the fluid heating unit may be or comprise a solar heating unit.

The at least one magnetic module may be configured to generate a magnetic field between a first magnetic pole and a second magnetic pole, wherein the at least one heating section is arranged relative to the at least one magnetic module, such that relative movement of the one or more heating sections causes the one or more heating sections to relatively move between the first magnetic pole and the second magnetic pole.

The heating system may further comprise at least one hydrogen generator, wherein the at least hydrogen generator may be configured to produce hydrogen. The at least one hydrogen generator may be configured to perform a hydrogen production process to produce the hydrogen. The hydrogen production process may be for example one or more of a steam reforming process, a high temperature steam electrolysis and a biomass gasification process. In particular, the heating system may be configured to transfer heat from the heated conductive fluid to the at least one hydrogen generator to perform the hydrogen production process. In particular, it may therefore be possible to build a supply chain of hydrogen for, e.g., the mobility industry and/or for industrial use, taking advantage of surplus heat energy generated during periods of low heat energy demand.

An aspect relates to a turbine, comprising a heating system, wherein the heating system is configured to convert kinetic energy of a rotation of a rotor of the turbine into heat energy. In particular, the heating system may comprise any combination of features described herein and/or shown in the Figures. The turbine may be one of a wind turbine or a water turbine, but other kinds of turbines may also be provided. For example, the turbine may be a conventional 2 MW nominal power wind turbine.

An aspect relates to a use of a heating system for generating heat energy from kinetic energy. In particular, the heating system may comprise any combination of features described herein and/or shown in the Figures.

An aspect relates to a method for generating heat energy, comprising providing at least one magnetic module, wherein each magnetic module is configured to generate a magnetic field. The method further comprises providing a conductive fluid transportation network comprising a conductive fluid, and one or more heating sections, wherein the conductive fluid is configured to flow through at least the one or more heating sections of the conductive fluid transportation network. The method further comprises causing relative movement between the at least one magnetic module and the one or more heating sections to generate a variable magnetic flux in the conductive fluid in the one or more heating sections to generate eddy currents in the conductive fluid. Furthermore, the method further comprises heating the conductive fluid in the one or more heating sections through the generated eddy currents. In particular, the method may further comprise any combination of features, as described herein or shown in the appended Figures.

Furthermore, a performance of the heating system has been simulated for a typical wind turbine of nominal power of 2 MW. In particular, the average power per volume of conductive fluid produced in a long, thin conductive cylinder is given by:

$$P_{Eddy} = \frac{\pi^2 B_p^2 d^2 f^2}{6k\rho D} \qquad (1)$$

In particular, $P_{Eddy}$ may be the power generated due to the eddy currents [W/kg], $B_p$ may be the peak of the magnetic field [T], d may be an inner diameter of the heated part of the pipe where the conductive fluid flows [m], f may be a frequency at which the magnetic field changes [Hz], k is a geometric constant (which may equal 2 for a cylinder), $\rho$ may be a conductive fluid resistivity [$\Omega m$], and D may be a density of the conductive fluid [kg/m$^3$].

Furthermore, the frequency f may also be a function of a spatial distribution of the at least one magnetic module and/or an angular velocity of the rotor.

In particular, the following four simulation cases may be considered, wherein the simulation parameters may be implemented in particular embodiments of the systems and methods according to this invention.

In a first experimental case, a wind turbine may be provided with GaInSn (galinstan) liquid metal as the conductive fluid. The at least one magnetic module may comprise at least one permanent niobium N52 magnet. Dimensions of each permanent niobium N52 magnet may be (thickness x width x poles gap): 0.07 m x 0.08 m x 0 03 m. The peak magnetic field at the magnet gap may be 0.8T. A number of induction poles may be 50, while three magnetic modules may be arranged in each pole. A gearbox ratio of the wind turbine may be 6. Furthermore, each heating section may comprise two substantially straight heating pipes, wherein each heating pipe may have a length of 0.8m and a diameter of 0.026m.

In a second experimental case, a wind turbine may be provided with sodium liquid metal as the conductive fluid. The at least one magnetic module may comprise at least one permanent niobium N52 magnet. Dimensions of each permanent niobium N52 magnet may be (thickness x width x poles gap): 0.07 m x 0.08 m x 0 03 m. The peak magnetic field at the magnet gap may be 0.8T. A number of induction poles may be 50, while three magnetic modules may be arranged in each pole. A gearbox ratio of the wind turbine may be 2. Furthermore, each heating section may comprise two substantially straight heating pipes, wherein each heating pipe may have a length of 1.3m and a diameter of 0.026m.

In a third experimental case, a wind turbine may be provided with lead liquid metal as the conductive fluid. The at least one magnetic module may comprise at least one permanent niobium N52 magnet. Dimensions of each permanent niobium N52 magnet may be (thickness x width x poles gap): 0.07 m x 0.08 m x 0 03 m. The peak magnetic field at the magnet gap may be 0.8T. A number of induction poles may be 50, while three magnetic modules may be arranged in each pole. A gearbox ratio of the wind turbine may be 10. Furthermore, each heating section may comprise two substantially straight heating pipes, wherein each heating pipe may have a length of 1.3m and a diameter of 0.026m.

In a fourth experimental case, a wind turbine may be provided with Hitec® molten salt as the conductive fluid. The at least one magnetic module may comprise at least one permanent niobium N52 magnet. Dimensions of each permanent niobium N52 magnet may be (thickness x width x poles gap): 0.07 m x 0.08 m x 0 03 m. The peak magnetic field at the magnet gap may be 0.8T. A number of induction poles may be 100, while six magnetic modules may be arranged in each pole. A gearbox ratio of the wind turbine may be 100. Furthermore, each heating section may comprise two substantially straight heating pipes, wherein each heating pipe may have a length of 2.0m and a diameter of 0.04m.

Tables 1 to 4 show a calculated performance of each of the above configurations according to equation (1) above.

Furthermore, it may also be possible to calculate a resulting skin depth that can be achieved with each of the above configurations:

$$\delta = \frac{1}{\sqrt{\pi f \mu \sigma}} \qquad (2)$$

In particular, f may be the frequency at which the magnetic field changes [Hz], $\mu$ may be the magnetic permeability of the conductive fluid [H/m], and $\sigma$ may be the electrical conductivity of the conductive fluid [S].

In the calculated simulations, the heating system has been adjusted in order that the resulting skin depth by each induction heating frequency is deep enough to penetrate practically through a whole thickness of the liquid metal or molten salt in the heated part of the heating sections.

*Table 1: calculated performance of the first experimental case according to equation (1) above.*

**Case 1: GaInSn as primary heat transfer fluid (Ha≈800)**

| Rotor speed | Rotor angular velocity | Rotor frequency | Induction heating frequency | Power | Eddy current heating | Skin depth |
|---|---|---|---|---|---|---|
| [rpm] | [rad/s] | [Hz] | [Hz] | [MW] | [MW] | [m] |
| 6 | 0,6283 | 0,100 | 30,000 | 0,1 | 0,153 | 0,049 |
| 8 | 0,8378 | 0,133 | 40,000 | 0,15 | 0,272 | 0,043 |
| 10 | 1,0472 | 0,167 | 50,000 | 0,2 | 0,425 | 0,038 |
| 12 | 1,2566 | 0,200 | 60,000 | 0,3 | 0,612 | 0,035 |
| 14 | 1,4661 | 0,233 | 70,000 | 0,5 | 0,833 | 0,032 |
| 16 | 1,6755 | 0,267 | 80,000 | 0,8 | 1,088 | 0,030 |
| 18 | 1,8850. | 0,300 | 90,000 | 1,2 | 1,377 | 0,029 |
| 20 | 2,0944 | 0,333 | 100,000 | 1,6 | 1,700 | 0,027 |
| 22 | 2,3038 | 0,367 | 110,000 | 2 | 2,057 | 0,026 |

*Table 2: calculated performance of the second experimental case according to equation (1) above.*

**Case 2: Na as primary heat transfer fluid (Ha≈5500)**

| Rotor speed | Rotor angular velocity | Rotor frequency | Induction heating frequency | Power | Eddy current heating | Skin depth |
|---|---|---|---|---|---|---|
| [rpm] | [rad/s] | [Hz] | [Hz] | [MW] | [MW] | [m] |
| 6 | 0.6283 | 0,100 | 10,000 | 0,1 | 0,147 | 0,035 |
| 8 | 0,8378 | 0,133 | 13,333 | 0,15 | 0,262 | 0,030 |
| 10 | 1,0472 | 0,167 | 16,667 | 0,2 | 0,409 | 0,027 |
| 12 | 1,2566 | 0,200 | 20,000 | 0,3 | 0,589 | 0,025 |
| 14 | 1,4661 | 0,233 | 23,333 | 0,5 | 0,802 | 0,023 |
| 16 | 1,6755 | 0,267 | 26,667 | 0,8 | 1,048 | 0,021 |
| 18 | 1,8850 | . 0,300 | 30,000 | 1,2 | 1,326 | 0,020 |
| 20 | 2,0944 | 0,333 | 33,333 | 1,6 | 1,637 | 0,019 |
| 22 | 2,3038 | 0,367 | 36,667 | 2 | 1,981 | 0,018 |

*Table 3*: calculated performance of the third experimental case according to equation (1) above.

**Case 3: Pb as primary heat transfer fluid (Ha≈500)**

| Rotor speed | Rotor angular velocity | Rotor frequency | Induction heating frequency | Power | Eddy current heating | Skin depth |
|---|---|---|---|---|---|---|
| [rpm] | [rad/s] | [Hz] | [Hz] | [MW] | [MW] | [m] |
| 6 | 0,6283. | 0.100 | 50,000 | 0.1 | .0,153 | 0,078 |
| 8 | 0,8378 | 0.133 | 66,667 | 0,15 | 0,273 | 0,068 |
| 10 | 1,0472 | 0,167 | 83,333 | 0,2 | 0,426 | 0,060 |
| 12 | 1,2566 | 0,200 | 100,000 | 0,3 | 0,614 | 0,055 |
| 14 | 1,4661 | 0,233 | 116,667 | 0,5 | 0,836 | 0,051 |
| 16 | 1,6755 | 0,267 | 133,333 | 0,8 | 1,092 | 0,048 |
| 18 | 1,8850 | 0,300 | 150,000 | 1,2 | 1,381 | 0,045 |
| 20 | 2,0944 | 0,333 | 166,667 | 1,6 | 1,706 | 0,043 |
| 22 | 2,3038 | 0,367 | 183,333 | 2 | 2,064 | 0,041 |

*Table 4*: calculated performance of the fourth experimental case according to equation (1) above.

**Case 4: Molten Salt as primary heat transfer fluid (Ha≈5)**

| Rotor speed | Rotor angular velocity | Rotor frequency | Induction heating frequency | Power | Eddy current heating | Skin depth |
|---|---|---|---|---|---|---|
| [rpm] | [rad/s] | [Hz] | [Hz] | [MW] | [MW] | [m] |
| 6 | 0,6283 | 0,100 | 1000,000 | 0,1 | 0,149 | 2,075 |
| a | 0,8378 | 0,133 | 1333,333 | 0.15 | 0,266 | 1,797 |
| 10 | 1,0472 | 0,167 | 1666,667 | 0,2 | 0,415 | 1,607 |
| 12 | 1,2566 | 0,200 | 2000,000 | 0,3 | 0,598 | 1,467 |
| 14 | 1,4661 | 0,233 | 2333,333 | 0,5 | 0,813 | 1,358 |
| 16 | 1.6755. | 0,267 | 2666,667 | 0,8 | 1,062 | 1,271 |
| 18 | 1,8850 | 0,300 | 3000,000 | 1,2 | 1,345 | 1,198 |
| 20 | 2,0944 | 0,333 | 3333,333 | 1,6 | 1,660 | 1,136 |
| 22 | 2,3038 | 0,367 | 3666,667 | 2 | 2,009 | 1,084 |

The Hartmann (Ha) number is a dimensionless number that quantifies the ratio of electromagnetic forces to viscous forces and may be calculated via:

$$Ha = LB \sqrt{\frac{\sigma}{\mu_d}} \qquad (3)$$

L may be a characteristic length [m], B may be the magnetic field [T], $\mu_d$ may be the dynamic viscosity of the conductive fluid [Pa*s], and $\sigma$ may be the electrical conductivity of the conductive fluid [S].

In all experimental cases above, the Hartmann number seems to be low enough (< $10^4$) such that a pressure loss in the conductive fluid may be neglected. As the pressure loss scales linearly with the flow speed, it may be conveniently minimized by an appropriate design of the number of magnetic modules and/or magnetic stages and/or a size of the one or more heating sections in order to minimize the flow speed is said region.

The invention will be further explained with reference to exemplary embodiments illustrated in the appended Figures:

**Figure 1A to 1C:**    Show cross-sectional and perspective views of an exemplary heating system;

**Figures 2 to 4:**    Show perspective views of an exemplary heating system to be used with a wind turbine;

**Figure 5:**    Shows a schematic view of an exemplary heating system;

**Figure 6:**         Shows a schematic view of an exemplary heating system;

**Figure 7:**         Shows a schematic view of the exemplary heating system of Figure 6 with an exemplary heat energy consumer system; and

**Figure 8:**         Shows calculated performance curves of an exemplary wind turbine with 2 MW nominal power and an exemplary heating system.

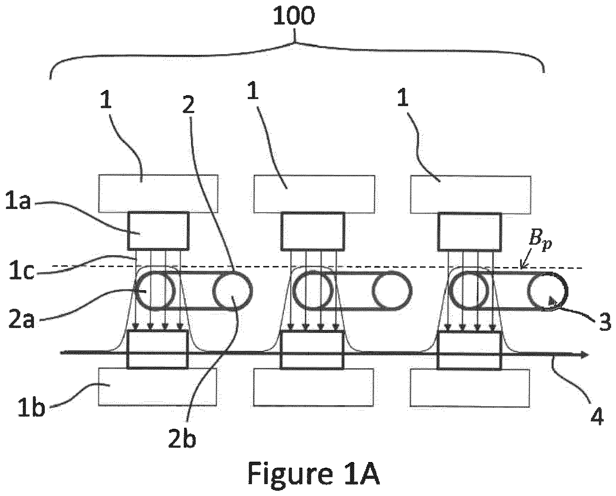

**Figure 1A** shows an exemplary cross-section through a part of a heating system 100, wherein a basic operational principle of the heating system 100 is illustrated.

In particular, the exemplary heating system 100 comprises at least one magnetic module 1. the magnetic module 1 may comprise a magnetic pole element 1a which may be a magnetic north pole and a corresponding magnetic pole element 1b which may be a magnetic south pole. In the exemplary view 3 magnetic modules 1 are shown. Each magnetic module 1 is configured to generate a magnetic field by means of the magnetic pole elements 1a and 1b.

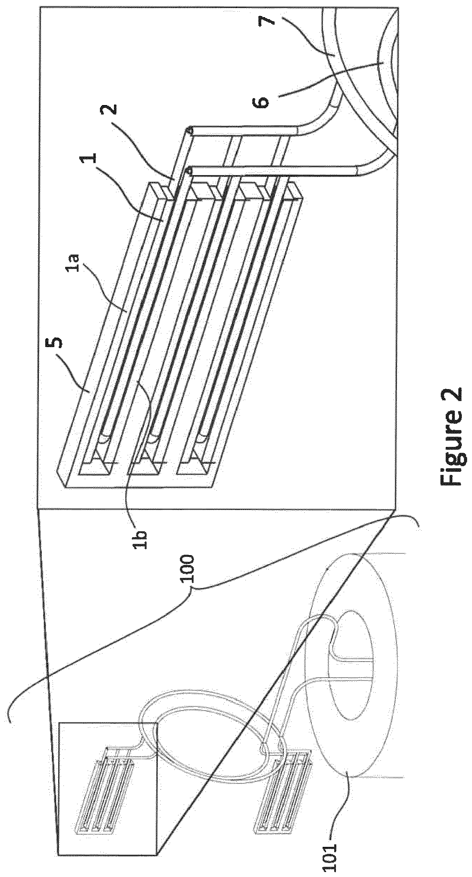

The heating system 100 further comprises a conductive fluid transportation network, wherein the conductive fluid transportation network comprises a conductive fluid 3, and one or more heating sections 2, wherein the conductive fluid 3 is configured to flow through at least the one or more heating sections 2 of the conductive fluid transportation network. The heating sections 2 may be made of hollow pipes. The hollow pipes may be arranged at least partially parallel. Each heating section 2 may comprise two or more parallel piping sections. In figure 2, the heating section 2 comprises a first parallel piping section 2a and a second parallel piping section 2b. Two parallel piping sections 2a, 2b may be at least partially arranged within the magnetic field 1c of a magnetic module 1. In figure 2 only piping section 2a of the two parallel piping sections is arranged within the magnetic field 1c.

The hollow pipes may be made of a material that allows the magnetic field to penetrate the hollow pipes so that the magnetic field may propagate into and within the hollow pipes. The heating sections 2 and/or the hollow pipes may be made of materials configured to withstand high temperatures of the hot conductive fluid and/or configured to withstand chemical attack from the hot conductive fluid. Furthermore, the heating sections 2 and/or the hollow pipes may be made of materials configured to avoid electromagnetic shielding of the conductive fluid, such as for example materials that are not strongly ferromagnetic. The heating sections 2 and/or the hollow pipes may for example at least partly consist of or completely be made of one or more of austenitic steels (e.g. AISI 316L, AISI 304L), Ni-alloys (e.g. Inconel), Ti-alloys (e.g. Ti6Al4V), refractory metals (e.g. W, V-alloys, Mo-alloys), and/or ceramics like nitrides and carbides (e.g. Si3N4, SiC). Specifically, the heating sections 2 and/or the hollow pipes may for example consist of composite materials including one or more, in particular all of austenitic steels (e.g. AISI 316L, AISI 304L), Ni-alloys (e.g. Inconel), Ti-alloys (e.g. Ti6Al4V), refractory metals (e.g. W, V-alloys, Mo-alloys), and/or ceramics like nitrides and carbides (e.g. Si3N4, SiC).

The heating system 100 is configured to cause relative movement 4 between the at least one magnetic module 1 and the one or more heating sections 2 to generate a variable magnetic flux in the conductive fluid 3 in the one or more heating sections 2 to generate eddy currents in the conductive fluid 3, wherein the generated eddy currents heat the conductive fluid 3 in the one or more heating sections 2. Specifically, the magnetic modules 1 may be moved relative to the heating sections 2. The heating sections 2 may be stationary relative to the magnetic modules 1. Thus the magnetic field 1c may be moved relative to the heating sections 2.

In Figure 1A the relative movement 4 is schematically indicated by a linear arrow, but said relative movement 4 is not restricted to such an orientation.

In particular, each magnetic module 1 may be configured to generate a magnetic field 1c, wherein the three shown magnetic modules 1 may comprise at least one of a permanent magnet, an inductive coil and a superconducting magnet. The at least one magnetic module may for example include or consist of Nd-Fe-B, which in particular may be suitable for low temperatures, and/or Al-Ni-Co and/or Sm-Co, which in particular may be suitable for high temperatures or a composition thereof. The at least one magnetic module may for example include or consist of ferrite. The at least one magnetic module may for example comprise or consist of a low temperature superconducting magnet. The low temperature superconducting magnet may for example include or consist of Nb-alloys (e.g. Nb-Sn, Nb-Ti). The at least one magnetic module may for example comprise or consist of a high temperature superconducting magnet. The high temperature superconducting magnet may for example include or consist of rare-earths-compounds (e.g. Y-Ba-Cu-O). One or all of the at least one magnetic modules may for example include or consist of a composite material comprising one or more of the above materials, i.e. one or more of Nd-Fe-B, Al-Ni-Co Sm-Co, ferrite a low temperature superconducting magnet, for example including or consisting of Nb-alloys (e.g. Nb-Sn, Nb-Ti), a high temperature superconducting magnet for example including or consisting of rare-earths-compounds (e.g. Y-Ba-Cu-O). Each magnetic module may preferentially be configured to generate a magnetic field having a magnetic flux density of at least approx. 0.3T, preferentially at least approx. 0.4T, further preferentially at least approx. 0.5T, further preferentially at least approx. 1T.

In particular, each exemplary magnetic module 1 generates the corresponding magnetic field 1c across at least one gap of the respective magnetic module 1. The at least one magnetic module 1 may be fixed relative to one another, and may further be equally spaced from one another. In other words, while the magnetic modules 1 may be arranged so that they are fixed relative to one another, all the magnetic modules 1 may be jointly moved. It is also possible to move groups of magnetic modules 1. Moreover, although the magnetic modules 1 are movable relative to the heating sections 2, the individual components of or within one magnetic module 1 may be stationary, i.e. fixed in position relative to one another.

The heating system 100 further comprises a conductive fluid transportation network, wherein the conductive fluid transportation network comprises a conductive fluid 3. The conductive fluid 3 may be or comprise any kind of conductive fluid, such as for example a liquid metal and/or a molten salt.

The conductive fluid transportation network further comprises one or more of the heating sections 2, wherein the conductive fluid 3 is configured to flow through at least the one or more heating sections 2 of the conductive fluid transportation network. In particular, the one or more heating sections 2 may be implemented as one or more piping sections. The one or more heating sections 2 may be fluidly connected, so that the conductive fluid 3 subsequently flows through the one or more heating sections 2.

The heating system 100 is configured to cause relative movement 4 between the at least one magnetic module 1 and the one or more heating sections 2 to generate a variable magnetic flux in the conductive fluid 3 in the one or more heating sections 2 to generate eddy currents in the conductive fluid 3, wherein the generated eddy currents heat the conductive fluid 3 in the one or more heating sections 2. In particular, the relative movement may be caused by holding one of the at least one magnetic module 1 and the one or more heating sections 2 stationary, while moving the other of the at least one magnetic module 1 and the one or more heating sections 2. In other words, the heating sections 2 may be stationary with respect to the magnetic modules 1 and the magnetic modules 1 may move relative to the heating sections 2, or vice versa. The magnetic modules 1 may be rotatably mounted to make a substantially circular movement. The heating sections 2 may be arranged in a circular configuration.

In particular, the relative movement 4 may cause the one or more heating sections 2 to traverse the at least one magnetic gap of each of the magnetic modules 1. In other words, the magnetic gap and thus the magnetic field moves in unison with the magnetic modules 1 and the magnetic field therefore moves relative to the heating sections 2 so that the heating sections 2 are subject to a varying magnetic field. In other words, due to the magnetic field generated across the at least one magnetic gap, a respective heating section 2 and the conductive fluid 3 in the respective heating section 2 may be temporarily exposed to a variable magnetic flux. In particular, said variable magnetic flux may generate eddy currents in the conductive fluid 3 in the respective heating section 2. The induced eddy currents may cause the conductive fluid 3 to be heated by the Joule effect.

In particular, the conductive fluid 3 may therefore be both a heat generation medium, as well as a transportation medium for transporting the generated heat.

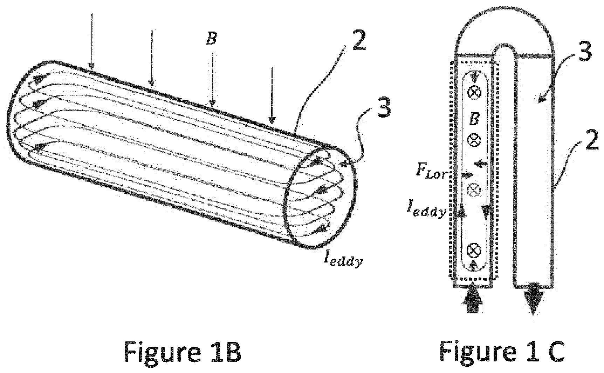

**Figures 1B and 1C** show a schematic overview of the generated eddy current within at least a portion of a heating section 2. In particular, as shown in Figure 1B, a part of a heating section 2 is shown through which the conductive fluid 3 may flow in an axial direction of the hollow pipe of the heating section 2. When exposed to the magnetic field B by the relative movement 4 (not shown), the conductive fluid is subjected to a variable magnetic flux, which in turn generates a current within conductive fluid 3. The generated eddy current $I_{eddy}$ flows in a circular shape perpendicular to the magnetic field B generated by the at least one magnetic module 1. The generated eddy current $I_{eddy}$ in turn causes the conductive fluid 3 to heat up via the Joule effect.

Figure 1C shows a cross-sectional view of a heating section 2, wherein a variable magnetic flux has generated an eddy current $I_{eddy}$ within the conductive fluid 3. Furthermore, the eddy current $I_{eddy}$ generates in combination with the magnetic field B a Lorentz force $F_{Lor}$. In the present arrangement and orientation of the heating section 2, the different Lorentz force $F_{Lor}$ contributions substantially cancel out. However, by changing the orientation of the heating section 2, a net Lorentz force $F_{Lor}$ on the conductive fluid may be generated. Utilizing such a net Lorentz force $F_{Lor}$ may be used as a passive pumping action of the conductive fluid 3.

**Figure 2** shows a perspective view of an exemplary heating system 100. In particular, three magnetic modules 1 are provided and mounted on a magnetic stage 5 in the enboxed expanded view. A substantially identical magnetic stage 5 is furthermore provided exactly opposite the magnetic stage 5 relative to a rotation axis of a rotor (not shown) of a wind turbine as shown in the view in the left hand part of Figure 2. The magnetic stage 5 and the substantially identical magnetic stage 5 each may operate as magnetic poles relative to the rotation axis. The three magnetic modules 1 of each magnetic stage 5 are mounted on the magnetic stage 5 along a radially outward direction relative to the rotation axis, wherein the three magnetic modules 1 are equally spaced from one another. Each magnetic stage 5 may comprise more or less than 3 magnetic modules 1. Providing 3 magnetic modules 1 has shown to be very efficient.

Each magnetic module 1 furthermore is configured to generate a magnetic field across the magnetic gap, as discussed above. Furthermore, while not shown in Figure 2, each magnetic stage 5 is mounted on the rotor, thus a rotating movement of the rotor results in a rotating movement of the magnetic stages 5. The heating system 100 further comprises at least three corresponding heating sections 2, wherein the three heating sections 2 and the three magnetic modules 1 are arranged, such that each heating section 2 may traverse a magnetic gap of one of the magnetic modules 1 mounted on the magnetic stage 5, when the magnetic modules 1 rotate and thus move relative to the heating sections 2. Each of the three heating sections 2 comprises 2 parallel piping sections, i.e. three parallel pipe pairs or pipe section pairs or pairs of piping sections. Each pair of piping sections is at least partially arranged within a corresponding magnetic gap. Also the three exemplary pairs of piping sections shown in figure 2 are arranged in parallel to each other spaced apart from each other by a given and distance. The distance my be equal for all pairs of piping sections and more or less predetermined by the magnetic pole element 1b of the magnetic module 1 of the magnetic stage 5.

The conductive fluid transportation network may further comprise one or more cold leg distributors 6 fluidly connected to each of the heating sections 2, wherein the conductive transportation network is configured such that the conductive fluid 3 flows from the cold leg distributor 6 to the heating sections 2. Thereby, an efficient distribution of conductive fluid from the cold leg distributor 6 to the one or more heating sections 2 may be provided. In particular, the cold leg distributor 6 may be configured to be substantially circular, wherein the cold leg distributor 6 may in particular be concentrically arranged around the rotation axis.

The conductive fluid transportation network may further comprise one or more hot leg distributors 7 fluidly connected to the heating sections 2, wherein the conductive transportation network is configured such that the conductive fluid 3 flows from the heating sections 2 to the hot leg distributor 7. Thereby, an efficient collection of conductive fluid 3 from the one or more heating sections 2 by the hot leg distributor 7 may be provided. In particular, the hot leg distributor 7 may be configured to be substantially circular, wherein the hot leg distributor 7 may in particular be concentrically arranged around the rotation axis.

The conductive fluid 3 in the cold leg distributor 6 may have a first temperature and the conductive fluid 3 in the hot leg distributor 7 may have a second temperature, wherein the first temperature may be lower than the second temperature.

Furthermore, the cold leg distributor 6 and the hot leg distributor 7 may further extend downwards from the heating sections 2 within a body of a support 101 of a wind turbine.

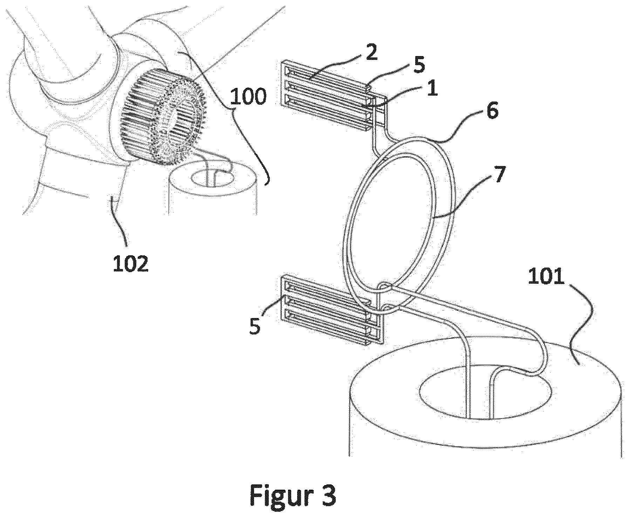

**Figure 3** shows a perspective view of the heating system 100 of Figure 2, wherein a plurality of substantially identical magnetic stages 5 are mounted on a rotor 102 of a wind turbine. In particular, the plurality of magnetic stages 5 may be equally spaced around the rotation axis of the rotor 102. A spacing between neighbouring magnetic stages 5 may be chosen to minimize and/or prevent a magnetic interference between the respectively generated magnetic fields. Magnetic gaps of magnetic modules 1 mounted at substantially identical radial distances from the rotation axis may be arranged to define substantially circular paths around the rotation axis. Furthermore, one or more heating sections 2 may be arranged and/or fixedly mounted relative to the support 101 of the wind turbine, such that each of the heating sections 2 is arranged within one of the defined circular paths. Due to the rotation of the rotor 102 the magnetic stages 5 rotate around and the magnetic gaps thus move relative to the heating sections 2

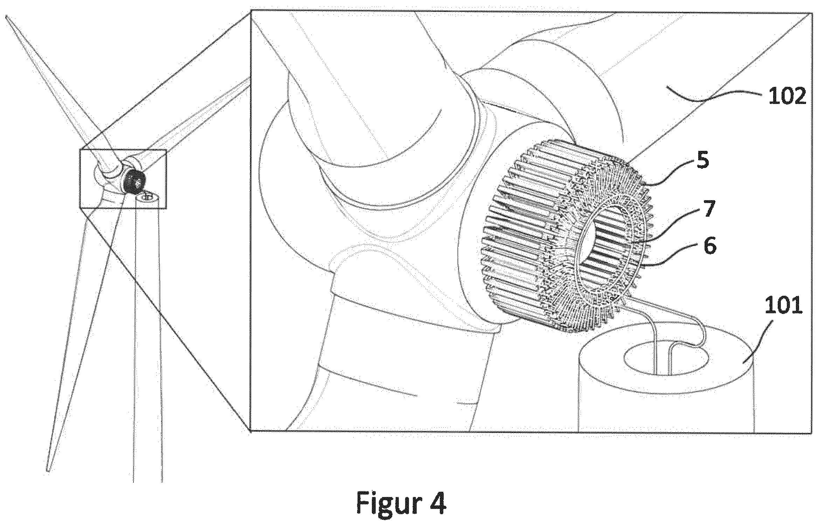

**Figure 4** shows a perspective view of the exemplary heating system 100 according to Figure 3, wherein the rotor 102 of the wind turbine is fully shown in its operational state at which the multitude of magnetic stages 5 are arranged. The heating sections 2 are arranged within magnetic stages 5 and thus not visible in Figure 4. A nacelle 103 is not shown for illustrative purposes. The nacelle 103 (not shown) may comprise one or more holding members for holding the heating sections 2 (not shown), the cold leg distributor 6 and the hot leg distributor 7 in place, that is stationary. The heating sections 2 (not shown), the cold leg distributor 6 and the hot leg distributor 7 may be at least partially mounted to a stator (not shown) of the wind turbine. The stator (not shown) may be at least partially arranged within a nacelle (not shown) of the wind turbine.

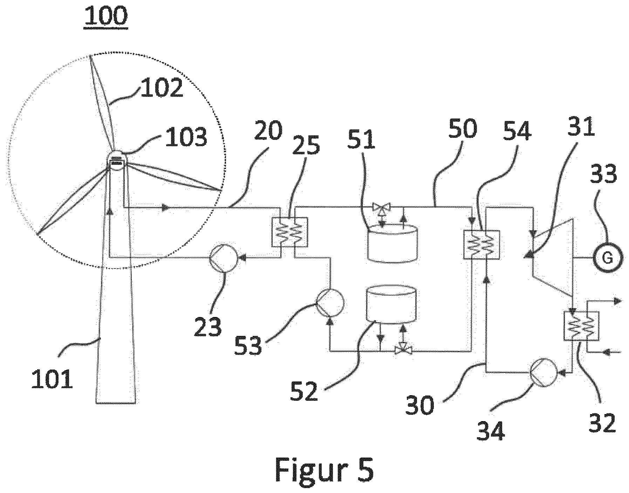

**Figure 5** shows a schematic view of an exemplary heating system 100. In particular, the heating system 100 may be used with a wind turbine having a support 101, a rotor 102, and a nacelle 103. The heating system 100 is configured to generate heat energy in the conductive fluid 3 within the heating sections 2 (not shown) at least partly arranged within the nacelle 103.

The heating system 100 may comprise at least one heat exchange unit 25 and at least one secondary heat energy storage system. Hot conductive fluid 3 is pumped by the pumping unit 23 of the conductive fluid transportation network 20 to the at least one heat exchange unit 25. The at least one heat exchange unit 25 is configured to transfer heat energy from the conductive fluid 3 to a secondary heat transportation fluid network 50 of the secondary heat energy storage system. After exiting the at least one heat exchange unit 25, the cooled conductive fluid 3 is pumped back into the nacelle 103 of the wind turbine for reheating.

The at least one secondary heat energy storage system may be a conventional heat energy storage system. The at least one secondary heat energy storage system may for example comprise a molten salt heat storage system. The at least one secondary heat energy storage system may comprise a high temperature, hot heat energy storage system 51 and a low temperature, cold heat energy storage system 52. In particular, such a two-tank storage system is well-suited for use with molten salts. In particular, the secondary heat energy storage system may comprise a secondary heat transportation fluid network 50 comprising a secondary heat transfer fluid, wherein the secondary heat transfer fluid may be a molten salt. The secondary heat transportation network 50 may further comprise at least one secondary pumping unit 53 configured to circulate the secondary heat transfer fluid through the secondary heat transportation fluid network 50.

The conductive fluid transportation network may further comprise a second heat exchange unit 54 and at least one power generator system 31, which may be implemented as a conventionally known Rankine cycle generator system, configured to generate electricity from heat energy, wherein the second heat exchange unit 54 is configured to transfer heat energy from the at least one secondary heat energy storage system to the at least one power generator system 31. The at least one power generator system may in particular further comprise a tertiary heat transportation fluid network 30, a tertiary pumping unit 34, an electricity generator 33, and a subcooling heat exchanger 32 configured to cool the tertiary heat transportation fluid network 30.

In particular, due to the reduced operational temperature of molten salts of around 500°C to 550 °C, a Rankine cycle power generator system is better suited than a Brayton cycle power generator system.

In the shown heating system 100, heat energy may be directly generated from renewable source, such as wind power in the shown example, which may then either be stored for later use or directly converted into electricity as needed.

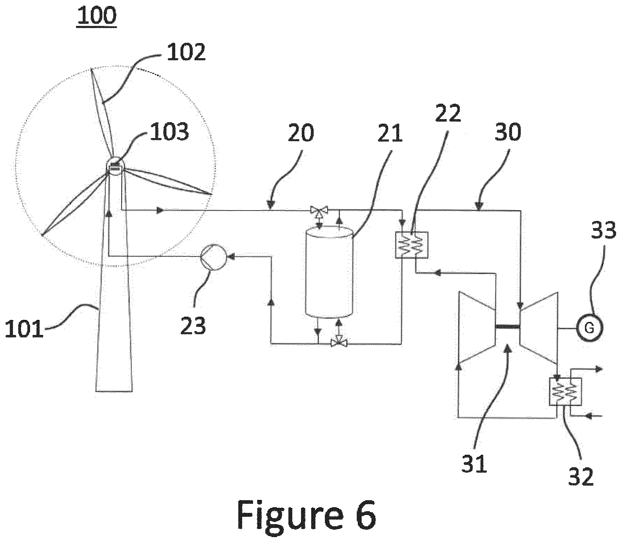

**Figure 6** shows a schematic view of an exemplary heating system 100. In particular, the heating system 100 may be used with a wind turbine having a support 101, a rotor 102, and a nacelle 103. The heating system 100 is configured to generate heat energy in the conductive fluid 3 within the heating sections 2 (not shown) at least partly arranged within the nacelle 103.

The conductive fluid transportation network 20 may further comprise at least one conventionally known heat energy storage system 21, wherein the at least one heat energy storage system 21 may be configured to store heat energy of the conductive fluid 3. The at least one heat energy storage system 21 may for example comprise a conventionally known thermocline heat storage system.

The conductive fluid transportation network 20 may further comprise a conventionally known heat exchange unit 22 configured to transfer heat energy from the conductive fluid to at least on power generator system 31.

The conductive fluid transportation network 20 may further comprise at least one conventionally known power generator system 31, which may be configured as a Brayton cycle generator system, configured to generate electricity from heat energy. The at least one power generator system 31 may in particular further comprise a tertiary heat transportation fluid network 30, a tertiary pumping unit (not shown), an electricity generator 33, and a subcooling heat exchanger 32 configured to cool the tertiary heat transportation fluid network 30. In particular, due to the higher operational temperature of liquid metals of in excess of 600 °C, a Brayton cycle power generator system is better suited than a Rankine cycle power generator system.

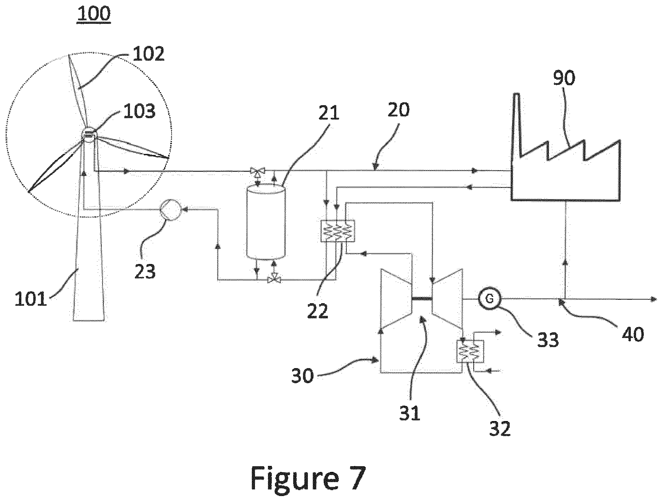

**Figure 7** shows a schematic view of an exemplary heating system 100 of Figure 6. In particular, the heating system 100 may be used with a wind turbine having a support 101, a rotor 102, and a nacelle 103. The heating system 100 is configured to generate heat energy in the conductive fluid 3 within the heating sections 2 (not shown) at least partly arranged within the nacelle 103.

Furthermore, the exemplary heating system 100 is substantially identical to the exemplary heating system 100 of Figure 6, but further includes at least one heat energy consumer system 90.

The heating system 100 may further comprise at least one heat energy consumer system 90, wherein the heating system 100 is configured to transfer heat energy from the conductive fluid 3 to the at least one heat energy consumer system 90. In particular, the at least one heat energy consumer system 90 may be directly connected to the conductive fluid transportation network 20. In particular, the at least one heat energy consumer system 90 may be an entity of an energy intensive industry, such as for example chemical and/or petrochemical, glass and ceramics, cement and lime production, iron, steel, non-ferrous metals and metal casting industries to name but just a few. Furthermore, the at least one heat energy consumer system 90 may further be connected to electricity generator 33 via electricity network 40 to also receive a supply of electricity.

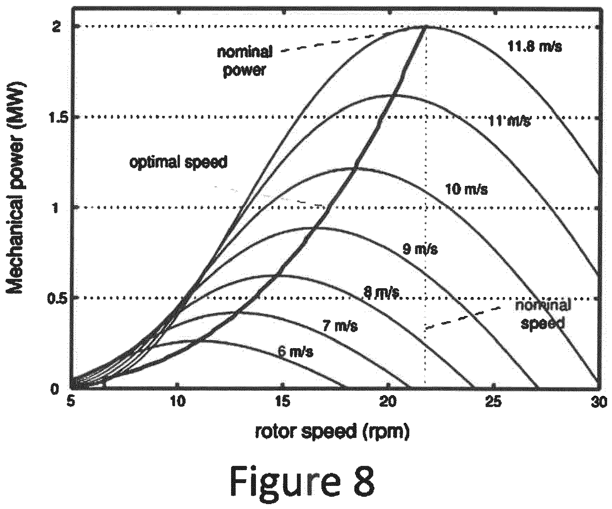

**Figure 8** shows calculated performance curves of an exemplary wind turbine with 2 MW nominal power and an exemplary heating system 100 for producing heating power. Performance curves shown in Figure 8 have been retrieved from M.B.C. Salles et al, J. Microw. Optoelectron. Electromagn. Appl., vol. 10(1), pp. 95-105, 2011.

In particular, Figure 8 illustrates the mechanical output from a wind turbine as a function of the wind speed and the calculated heating power according to Tables 1 to 4 above. A heating system 100 configuration may be adjusted in order to obtain a heating power that can be fitted into the wind turbine characteristic curve. Figure 8 may further display that for each rotor speed there is a possible wind turbine operational point that matches the heating performance curve.

**List of Reference Numerals**

**1**     magnetic module
**1a**    magnetic pole element

| | |
|---|---|
| **1b** | magnetic pole element |
| **1c** | magnetic field |
| **2** | heating section |
| **2a** | parallel piping section |
| **2b** | parallel piping section |
| **3** | conductive fluid |
| **4** | relative movement |
| **5** | magnetic stage |
| **6** | cold leg distributor |
| **7** | hot leg distributor |
| **20** | conductive fluid transportation network |
| **21** | at least one heat energy storage system |
| **22** | heat exchange unit |
| **23** | pumping unit |
| **25** | at least one heat exchange unit |
| **30** | tertiary heat transportation fluid network |
| **31** | at least one power generator system |
| **32** | subcooling heat exchanger |
| **33** | electricity generator |
| **34** | tertiary pumping unit |
| **40** | electricity network |
| **50** | secondary heat transportation fluid network |
| **51** | high temperature, hot heat energy storage system |
| **52** | low temperature, cold heat energy storage system |
| **53** | at least one secondary pumping unit |
| **54** | second heat exchange unit |
| **90** | at least one heat energy consumer system |
| **100** | heating system |
| **101** | support |
| **102** | rotor |
| **103** | nacelle |

**Claims**

1. A heating system (100), comprising:

    at least one magnetic module (1), wherein each magnetic module (1) is configured to generate a magnetic field; and
    a conductive fluid transportation network (20) comprising:

        a conductive fluid (3), and
        one or more heating sections (2), wherein the conductive fluid (3) is configured to flow through at least the one or more heating sections (2) of the conductive fluid transportation network (20),

    wherein the heating system is configured to cause relative movement (4) between the at least one magnetic module (1) and the one or more heating sections (2) thereby generating a variable magnetic flux in the conductive fluid (3) in the one or more heating sections (2) resulting in eddy currents in the conductive fluid (3), wherein the generated eddy currents heat the conductive fluid (3) in the one or more heating sections (2).

2. The heating system (100) according to claim 1, wherein the heating system (100) further comprises:

    a stato r;
    a rotor (102) configured to rotate around a rotation axis relative to the stator, wherein the at least one magnetic module (1) is attached to the rotor (102) to rotate around the rotation axis during rotation of the rotor (102), and
    wherein the one or more heating sections (2) are attached to the stator.

3. The heating system (100) according to claim 2, wherein the conductive fluid (3) transportation network comprises multiple heating sections (2), wherein the multiple heating sections (2) are arranged circumferentially around the rotation axis of the rotor (102).

4. The heating system (100) according to claim 2 or 3, wherein the rotor (102) is a rotor (102) of a turbine (103), and, optionally, wherein the turbine (103) is one of a wind turbine (103) or a water turbine.

5. The heating system (100) according to one of claims 2 to 4, wherein the rotor (102) comprises a gearbox, wherein the at least one magnetic module (1) is fixed to the gearbox of the rotor (102); or
wherein the rotor (102) does not comprise a gearbox.

6. The heating system (100) according to one of the preceding claims, wherein the conductive fluid (3) is one of a molten salt and a liquid metal.

7. The heating system (100) according to one of the preceding claims, wherein the conductive fluid transportation network comprises at least one thermal expansion compensation device,
wherein the at least one thermal expansion compensation device is configured to compensate for thermal expansion caused by the heating of the conductive fluid (3) in the at least one heating section (2).

8. The heating system (100) according to one of the preceding claims, wherein the at least one heating section (2) comprises at least two substantially linear piping sections, wherein:

the at least two substantially linear piping sections are arranged to be substantially parallel; and/or
the at least two substantially linear piping sections are arranged such that a Lorentz force generated by the generated eddy currents on the conductive fluid is at least partially directed along the direction of flow of the conductive fluid in the at least one heating section.

9. The heating system (100) according to one of the preceding claims, wherein the conductive fluid transportation network comprises at least one heat exchange unit and at least one secondary heat energy storage system, wherein the at least one heat exchange unit is configured to transfer heat energy from the conductive fluid of the fluid transportation network to the at least one secondary heat energy storage system.

10. The heating system (100) according to one of the preceding claims, wherein the conductive fluid transportation network further comprises a second heat exchange unit and at least one power generator system configured to generate electricity from heat energy, wherein the second heat exchange unit is configured to transfer heat energy from the at least one heat energy storage system to the at least one power generator system.

11. The heating system (100) according to one of the preceding claims, wherein the conductive fluid transportation network comprises at least one heat energy storage system, wherein the at least one heat storage system is configured to store heat energy of the conductive fluid of the fluid transportation network.

12. The heating system (100) according to one of the preceding claims, wherein the conductive fluid transportation network comprises a fluid heating unit, wherein the fluid heating unit is configured to heat the conductive fluid if the conductive fluid has a temperature below a predetermined temperature threshold.

13. Turbine (102), comprising:
a heating system (100) according to one of claims 1 to 12, wherein the heating system (100) is configured to convert kinetic energy of a rotation of a rotor (102) the turbine (100) into heat energy.

14. Use of a heating system according to any one of claims 1 to 12 for generating heat energy from kinetic energy.

15. A method for heating, comprising:

providing at least one magnetic module (1), wherein each magnetic module (1) is configured to generate a magnetic field;
providing a conductive fluid transportation network comprising:

a conductive fluid (3), and

one or more heating sections (2), wherein the conductive fluid is configured to flow through at least the one or more heating sections (2) of the conductive fluid transportation network,

causing relative movement between the at least one magnetic module (1) and the one or more heating sections (2) to generate a variable magnetic flux in the conductive fluid (3) in the one or more heating sections (2) to generate eddy currents in the conductive fluid (3); and
heating the conductive fluid (3) in the one or more heating sections through the generated eddy currents.

**Patentansprüche**

1. Heizsystem (100), aufweisend:

   mindestens ein Magnetmodul (1), wobei jedes Magnetmodul (1) konfiguriert ist, ein Magnetfeld zu erzeugen; und
   ein Netzwerk (20) zum Transport von leitfähigem Fluid, wobei das Netzwerk aufweist:

      ein leitfähiges Fluid (3), und
      einen oder mehrere Heizabschnitte (2), wobei das leitfähige Fluid (3) konfiguriert ist, durch zumindest den einen oder die mehreren Heizabschnitte (2) des Netzwerks (20) zum Transport von leitfähigem Fluid zu strömen,

   wobei das Heizsystem konfiguriert ist, eine Relativbewegung (4) zwischen dem mindestens einen Magnetmodul (1) und dem einen oder den mehreren Heizabschnitten (2) herbeizuführen, wodurch ein variabler magnetischer Fluss in dem leitfähigen Fluid (3) in dem einen oder den mehreren Heizabschnitten (2) erzeugt wird, was zu Wirbelströmen in dem leitfähigen Fluid (3) führt,
   wobei die erzeugten Wirbelströme das leitfähige Fluid (3) in dem einen oder den mehreren Heizabschnitten (2) erwärmen.

2. Heizsystem (100) nach Anspruch 1, wobei das Heizsystem (100) ferner aufweist:

   einen Stator;
   einen Rotor (102), der konfiguriert ist, sich relativ zu dem Stator um eine Drehachse zu drehen,
   wobei das mindestens eine Magnetmodul (1) an dem Rotor (102) angebracht ist, um sich während der Drehung des Rotors (102) um die Drehachse zu drehen, und
   wobei der eine oder die mehreren Heizabschnitte (2) an dem Stator angebracht sind.

3. Heizsystem (100) nach Anspruch 2, wobei das Netzwerk zum Transport von leitfähigem Fluid (3) mehrere Heizabschnitte (2) aufweist, wobei die mehreren Heizabschnitte (2) in Umfangsrichtung um die Drehachse des Rotors (102) angeordnet sind.

4. Heizsystem (100) nach Anspruch 2 oder 3, wobei der Rotor (102) ein Rotor (102) einer Turbine (103) ist und optional wobei die Turbine (103) eine Windturbine (103) oder eine Wasserturbine ist.

5. Heizsystem (100) nach einem der Ansprüche 2 bis 4, wobei der Rotor (102) ein Getriebe aufweist, wobei das mindestens eine Magnetmodul (1) an dem Getriebe des Rotors (102) befestigt ist; oder
   wobei der Rotor (102) kein Getriebe aufweist.

6. Heizsystem (100) nach einem der vorstehenden Ansprüche, wobei das leitfähige Fluid (3) ein geschmolzenes Salz oder ein flüssiges Metall ist.

7. Heizsystem (100) nach einem der vorstehenden Ansprüche, wobei das Netzwerk zum Transport von leitfähigem Fluid mindestens eine Vorrichtung zur Kompensation von Wärmeausdehnung aufweist,
   wobei die mindestens eine Vorrichtung zur Kompensation von Wärmeausdehnung konfiguriert ist, die Wärmeausdehnung zu kompensieren, die durch das Erwärmen des leitfähigen Fluids (3) in dem mindestens einen Heizabschnitt (2) verursacht wird.

8. Heizsystem (100) nach einem der vorstehenden Ansprüche, wobei der mindestens eine Heizabschnitt (2) mindestens zwei im Wesentlichen lineare Leitungsabschnitte aufweist, wobei:

die mindestens zwei im Wesentlichen linearen Leitungsabschnitte im Wesentlichen parallel angeordnet sind; und/oder

die mindestens zwei im Wesentlichen linearen Leitungsabschnitte derart angeordnet sind, dass eine Lorentzkraft, die durch die auf dem leitfähigen Fluid erzeugten Wirbelströme erzeugt wird, zumindest teilweise entlang der Strömungsrichtung des leitfähigen Fluids in dem mindestens einen Heizabschnitt gerichtet wird.

9. Heizsystem (100) nach einem der vorstehenden Ansprüche, wobei das Netzwerk zum Transport von leitfähigem Fluid mindestens eine Wärmetauschereinheit und mindestens ein Sekundärwarme-Energiespeichersystem aufweist, wobei die mindestens eine Wärmetauschereinheit konfiguriert ist, Wärmeenergie von dem leitfähigen Fluid des Fluidtransportnetzwerks an das mindestens eine Sekundärwarme-Energiespeichersystem zu übertragen.

10. Heizsystem (100) nach einem der vorstehenden Ansprüche, wobei das Netzwerk zum Transport von leitfähigem Fluid ferner eine zweite Wärmetauschereinheit und mindestens ein Stromerzeugungssystem aufweist, das konfiguriert ist, aus der Wärmeenergie Strom zu erzeugen, wobei die zweite Wärmetauschereinheit konfiguriert ist, Wärmeenergie von dem mindestens einen Wärmeenergiespeichersystem an das mindestens eine Stromerzeugungssystem zu übertragen.

11. Heizsystem (100) nach einem der vorstehenden Ansprüche, wobei das Netzwerk zum Transport von leitfähigem Fluid mindestens ein Wärmeenergiespeichersystem aufweist, wobei das mindestens eine Wärmeenergiespeichersystem konfiguriert ist, Wärmeenergie des leitfähigen Fluids des Fluidtransportnetzwerks zu speichern.

12. Heizsystem (100) nach einem der vorstehenden Ansprüche, wobei das Netzwerk zum Transport von leitfähigem Fluid eine Fluidheizeinheit aufweist, wobei die Fluidheizeinheit konfiguriert ist, das leitfähige Fluid zu erwärmen, wenn das leitfähige Fluid eine Temperatur unterhalb eines vorbestimmten Temperaturschwellenwerts aufweist.

13. Turbine (103), aufweisend:
ein Heizsystem (100) nach einem der Ansprüche 1 bis 12, wobei das Heizsystem (100) konfiguriert ist, kinetische Energie einer Drehung eines Rotors (102) der Turbine (100) in Wärmeenergie umzuwandeln.

14. Verwendung eines Heizsystems nach einem der Ansprüche 1 bis 12 zur Erzeugung von Wärmeenergie aus kinetischer Energie.

15. Verfahren zum Heizen, umfassend:

Bereitstellen mindestens eines Magnetmoduls (1), wobei jedes Magnetmodul (1) konfiguriert ist, ein Magnetfeld zu erzeugen; und
Bereitstellen eines Netzwerks zum Transport von leitfähigem Fluid, aufweisend:

ein leitfähiges Fluid (3), und
einen oder mehrere Heizabschnitte (2), wobei das leitfähige Fluid konfiguriert ist, durch den einen oder die mehreren Heizabschnitte (2) des Netzwerks zum Transport von leitfähigem Fluid zu strömen,

Herbeiführen einer Relativbewegung zwischen dem mindestens einen Magnetmodul (1) und dem einen oder den mehreren Heizabschnitten (2), um einen variablen magnetischen Fluss in dem leitfähigen Fluid (3) in dem einen oder den mehreren Heizabschnitten (2) zu erzeugen, um Wirbelströme in dem leitfähigen Fluid (3) zu erzeugen; und
Erwärmen des leitfähigen Fluids (3) in dem einen oder den mehreren Heizabschnitten mittels der erzeugten Wirbelströme.

**Revendications**

1. Système de chauffage (100) comprenant :

au moins un module magnétique (1), chaque module magnétique (1) étant conçu pour produire un champ magnétique ; et
un réseau (20) de transport de fluide conducteur, le réseau comprenant :

un fluide conducteur (3), et

une ou plusieurs sections de chauffage (2), le fluide conducteur (3) étant conçu pour couler à travers au moins la ou les sections de chauffage (2) du réseau (20) de transport de fluide conducteur,

le système de chauffage étant conçu pour produire un mouvement relatif (4) entre le ou les modules magnétiques (1) et la ou les sections de chauffage (2), produisant ainsi un flux magnétique variable dans le fluide conducteur (3) dans la ou les sections de chauffage (2), générant des courants de Foucault dans le fluide conducteur (3), les courants de Foucault générés chauffant le fluide conducteur (3) dans la ou les sections de chauffage (2).

2. Le système de chauffage (100) selon la revendication 1, le système de chauffage (100) comprenant en outre :

un stator ;

un rotor (102) conçu pour tourner autour d'un axe de rotation par rapport au stator,

l'au moins une module magnétiques (1) étant fixés au rotor (102) afin de tourner autour de l'axe de rotation pendant la rotation du rotor (102), et

la ou les sections de chauffage (2) étant fixées au stator.

3. Le système de chauffage (100) selon la revendication 2, dans lequel le réseau de transport du fluide conducteur (3) comprend de multiples sections de chauffage (2), les multiples sections de chauffage (2) étant disposées de manière circonférentielle autour de l'axe de rotation du rotor (102).

4. Le système de chauffage (100) selon les revendications 2 ou 3, dans lequel le rotor (102) est un rotor (102) d'une turbine (103) et, optionnellement, dans lequel la turbine (103) est une éolienne (103) ou une turbine à eau.

5. Le système de chauffage (100) selon l'une des revendications 2 à 4, dans lequel le rotor (102) comprend une boîte à engrenage, l'au moins un module magnétiques (1) étant fixé à la boîte à engrenage du rotor (102) ; ou dans lequel le rotor (102) ne comprend pas de boîte à engrenage.

6. Le système de chauffage (100) selon l'une des revendications précédentes, dans lequel le fluide conducteur (3) est un sel fondu ou un métal liquide.

7. Le système de chauffage (100) selon l'une des revendications précédentes, dans lequel le réseau de transport de fluide conducteur comprend au moins un dispositif de compensation d'expansion thermique, l'au moins un dispositif de compensation d'expansion thermique étant conçus pour compenser l'expansion thermique provoquée par le chauffage du fluide conducteur (3) dans l'au moins une section de chauffage (2).

8. Le système de chauffage (100) selon l'une des revendications précédentes, dans lequel l'au moins une section de chauffage (2) comprend au moins deux sections de conduites sensiblement linéaires,

les au moins deux sections conduites sensiblement linéaires étant agencées de façon à être sensiblement parallèles ; et/ou

les au moins deux sections sensiblement linéaires étant agencées de sorte qu'une force de Lorentz, produite par les courants de Foucault générés sur le fluide conducteur, soit dirigée au moins partiellement le long de la direction d'écoulement du fluide conducteur dans l'au moins une section de chauffage.

9. Le système de chauffage (100) selon l'une des revendications précédentes, dans lequel le réseau de transport de fluide conducteur comprend au moins une unité d'échange de chaleur et au moins un système de stockage d'énergie thermique secondaire, l'au moins une unité d'échange de chaleur étant conçue pour transférer de l'énergie thermique du fluide conducteur du réseau de transport de fluide à l'au moins un système de stockage d'énergie thermique secondaire.

10. Le système de chauffage (100) selon l'une des revendications précédentes, dans lequel le réseau de transport de fluide conducteur comprend en outre une seconde unité d'échange de chaleur et au moins un système générateur d'électricité conçu pour produire de l'électricité à partir de l'énergie thermique, la seconde unité d'échange de chaleur étant conçue pour transférer de l'énergie thermique de l'au moins un système de stockage d'énergie thermique à l'au moins un système générateurs d'électricité.

11. Le système de chauffage (100) selon l'une des revendications précédentes, dans lequel le réseau de transport de fluide conducteur comprend au moins un système de stockage d'énergie thermique, le ou les systèmes de stockage d'énergie thermique étant conçus pour stocker l'énergie thermique du fluide conducteur du réseau de transport de fluide.

**12.** Le système de chauffage (100) selon l'une des revendications précédentes, dans lequel le réseau de transport de fluide conducteur comprend une unité de chauffage de fluide, l'unité de chauffage de fluide étant conçue pour chauffer le fluide conducteur si le fluide conducteur présente une température inférieure à une valeur seuil prédéfinie de température.

**13.** Turbine (103) comprenant :
un système de chauffage (100) selon l'une des revendications 1 à 12, le système de chauffage (100) étant conçu pour convertir l'énergie cinétique d'une rotation d'un rotor (102) de la turbine (100) en énergie thermique.

**14.** Utilisation d'un système de chauffage selon l'une quelconque des revendications 1 à 12 pour produire de l'énergie thermique à partir de l'énergie cinétique.

**15.** Procédé de chauffage comprenant :

l'utilisation d'au moins un module magnétique (1), chaque module magnétique (1) étant conçu pour produire un champ magnétique ; et
l'utilisation d'un réseau de transport de fluide conducteur, le réseau comprenant :

un fluide conducteur (3), et
une ou plusieurs sections de chauffage (2), le fluide conducteur étant conçu pour couler à travers la ou les sections de chauffage (2) du réseau de transport de fluide conducteur,

la production d'un mouvement relatif entre le ou les modules magnétiques (1) et la ou les sections de chauffage (2) afin de produire un flux magnétique variable dans le fluide conducteur (3) dans la ou les sections de chauffage (2), générant des courants de Foucault dans le fluide conducteur (3) ; et
le chauffage du fluide conducteur (3) dans la ou les sections de chauffage par l'intermédiaire des courants de Foucault générés.

Figure 1A

Figure 1B

Figure 1 C

Figure 2

Figur 3

Figur 4

EP 4 064 790 B1

Figur 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2489874 A1

**Non-patent literature cited in the description**

• **M.B.C. SALLES et al.** *J. Microw. Optoelectron. Electromagn. Appl.,* 2011, vol. 10 (1), 95-105